# EUROPÄISCHE PATENTSCHRIFT

(11) **EP 2 589 322 B1**
(45) Veröffentlichungstag und Bekanntmachung des Hinweises auf die Patenterteilung: **08.07.2015**
(21) Anmeldenummer: 12007282.2
(22) Anmeldetag: 23.10.2012
(51) Int. Cl.: A47J 31/44

(54) **Kaffeemaschine, insbesondere Espressovollautomat**
Coffee machine, in particular fully automatic espresso machine
Machine à café, notamment automate à espresso

(30) Priorität: 02.11.2011 DE 202011107306 U
(43) Veröffentlichungstag der Anmeldung: 08.05.2013
(73) Patentinhaber: Eugster/Frismag AG, 8580 Amriswil (CH)
(72) Erfinder: Riessbeck, Wolfgang, 8597 Landschlacht (CH); Wäger, Simon, 8580 Amriswil (CH)
(74) Vertreter: Schubert, Siegmar

(56) Entgegenhaltungen:
- EP-A1- 0 801 922
- WO-A1-2011/105942
- DE-A1-102010 007 143
- DE-A1-102010 035 638

## Beschreibung

Die Erfindung betrifft eine Kaffeemaschine, insbesondere Espressovollautomat nach dem Oberbegriff des Anspruchs 1.

Die EP 0801922 A1 offenbart eine Milchschäumvorrichtungfür eine derartige Kaffeemaschine, in der ein innerer Milchkanal zu einer Schäumkammer vorgesehen ist, in den ein Bypasslufteingang für eine zuschaltbare Luftzufuhr mündet und an den ein Anschlussstutzen für eine bewegliche Milchzuführleitung angeschlossen ist, wobei Mittel zum Reinigen der Milchschäumvorrichtung und der Milchzuführleitung mit Spülwasser aus einem Durchlauferhitzer der Kaffeemaschine vorgesehen sind, mit denen der Milchschäumvorrichtung über eine gesteuerte Ventilanordnung Spülwasser zuführbar ist. Ein Milchansaugende der Milchzuführleitung vor Beaufschlagung der Milchschäumvorrichtung mit Spülwasser kann statt mit einem Milchvorratsbehälter mit einer Restwasserschale der Kaffeemaschine unmittelbar oder mittelbar fluidleitend verbunden werden. Stromabwärts einer Schäumkammerauslassöffnung ist ein umschaltbares Auslassreduzierventil angeordnet, welches einen in einer Milch-/Milchschaumbereitungsstellung durchschaltbaren Durchlassweg aufweist. Der Bypasslufteingang der Milchschäumvorrichtung ist in Spülstellung der gesteuerten Ventilanordnung gegenüber dem inneren Milchkanal absperrbar. Das Umschaltventil kann beispielsweise mit einem Druckknopf bestätigt werden. Das vorgenannte Auslassreduzierventil ist allerdings mit Blockiermitteln ausgebildet, mit denen ein Auslass in Spülstellung ganz gesperrt wird. Somit kann in Spülstellung kein Teil der Milchschäumvorrichtung stromabwärts der Blockiermittel gespült werden.

In einem aus der WO 2011/105942 A1 bekannten System zur Herstellung von Milchschaum ist eine Milchleitung zwischen einem Milchbeutel und einem Durchlauferhitzer vorgesehen, in die eine Leitung mündet, die über ein Sperrventil mit einem Heißwassertank in Verbindung steht. Im Anschluss an den Durchlauferhitzer führt eine Leitung über eine Pumpe und ein Verteilerventil zu einem Mischgefäß, in dem der Milchschaum erzeugt wird. Das Mischgefäß weist ein einfaches Auslassrohr auf. Das Verteilerventil ist als Zwei-Wege-Ventil ausgebildet, welches in einer Milchschaumbereitungsstellung die Milchleitung zu dem Mischgefäß durchschaltet. Eine Spülung des Mischgefäßes, der in sie mündenden Milchleitung und des Auslassrohrs erfolgt, wenn der Heißwassertank fluidleitend mit der Milchleitung verbunden ist. Dazu verbindet das Verteilerventil in seiner Spülstellung die Milchleitung stromabwärts der Einmündung der Verbindungsleitung zu dem Heißwassertank mit einer Auffangschale.

Gemäß der DE 102010035638 A1 umfasst eine Vorrichtung zum Aufschäumen von Milch in einem Heißgetränkeautomat eine Milchaufschaumdüse, in der Milch mit Wasserdampf erhitzbar und mit Umgebungsluft vermischbar ist und die eine Treibdüse, eine Luftleitung für die Zufuhr von Umgebungsluft, je einen Anschluss für die Zufuhr von Wasserdampf als Treibmittel und Milch und einen Auslass für Milchschaum aufweist. Um ein Verschmutzen der Luftleitung durch Milch weitgehend zu verhindern, ist die Luftleitung in die Treibdüse integriert und weist außerhalb der Treibdüse eine Luftdüse mit reduziertem Querschnitt auf. An der Luftdüse ist ein schaltbares Ventil angeordnet, mit dem die Luftmenge gesteuert werden kann. Das Ventil kann auch als Umschaltventil ausgebildet sein, welches einen zusätzlichen Anschluss für ein Reinigungsmedium wie Wasser oder Wasserdampf aufweist, um (nur) die Luftdüse im Bedarfsfall zu reinigen.

Bei einer bekannten Kaffeemaschine (DE 10 2010 007 143 A1) wird ein Bypasslufteingang für eine zuschaltbare Luftzufuhr an den inneren Milchkanal zu der Schäumkammer zur Reinigung der Milchansaugleitung und der Schäumvorrichtung einschließlich der Schäumkammer benutzt, indem nach Lösen des Milchansaugendes der Milchansaugleitung von dem Milchvorratsbehälter und Verbinden des Milchansaugendes mit der Restwasserschale der Kaffeemaschine der Bypasslufteingang mit Spülwasser beaufschlagt wird, welches sich in dem inneren Milchkanal zu der Milchansaugleitung hin und zu der Schäumkammer hin verzweigt, so dass beide gleichzeitig gereinigt werden. Die anteiligen Durchflüsse des Spülwassers durch die Milchansaugleitung und durch die Schäumkammer stellen sich entsprechend den konstruktiven Gegebenheiten der Milchschäumvorrichtung und der Milchansaugleitung, insbesondere den lichten Querschnitten des inneren Milchkanals und der Milchansaugleitung und deren Längen, ein. Es kann daher vorkommen, dass nicht sowohl die Milchansaugleitung als auch die Schäumkammer optimal gereinigt werden, mit der Folge, dass der Spülvorgang für beide zu verlängern ist, mit entsprechend höherem Spülwasserverbrauch.

Eine annähernd gleichzeitige Reinigung der im Normalbetrieb mit Milch bzw. mit Milchschaum beaufschlagten Bereiche eines Milchaufschäumers sowie eines hieran angeschlossenen Milchansaugschlauchs oder -rohrs, kann mit einer Spül-/Reinigungseinrichtung erfolgen, die auf einen Heißwasserausgabekanal der Vorrichtung aufsteckbar oder anschließbar ist und einen separaten Kanalabschnitt aufweist, der auf den Milchansaugschlauch oder das Milchansaugrohr ein- oder aufgesteckt werden kann (DE 10 2008 014 886 A1). Mit der auf die Vorrichtung, insbesondere den Milchaufschäumer, aufgesteckten Spül-/Reinigungseinrichtung wird eine umgekehrt zur normalen Strömungsrichtung erzwungene Strömung des Heißwassers erreicht, welche die im Normalbetrieb mit Milch bzw. Milchschaum beaufschlagten Bereiche der Vorrichtung rückspült und damit reinigt. Über den mit einem Milcheinlasskanal der Vorrichtung gekoppelten Kanalabschnitt der Spül-/Reinigungseinrichtung kann gleichzeitig mit der Reinigung der Vorrichtung auch ein Reinigen des Milchansaugschlauchs bzw. der Milchansaugleitung erfolgen. Die Spül-/Reinigungseinrichtung stellt ein gesondertes Teil dar, welches passgenau gefertigt sein muss, um auf die Anschlusskonfiguration der Vorrichtung zu passen. Die Handhabung der Spül-/ Reinigungsvorrichtung ist umständlich. Außerdem muss sie selbst beispielsweise in einer Spülmaschine gereinigt werden.

Die US 5 738 002 A offenbart eine an eine Espressomaschine ansetzbare, sich selbst reinigende Milchschaumerzeugungseinrichtung, an der eine Auslassöffnung eines Schaumkörpers mit einer Spülkappe verschließbar ist, die hierzu in die Auslauföffnung eingeschraubt wird. Bei entfernter Spülkappe kann Dampf, der die Milchschaumerzeugungseinrichtung durchströmt, und in diese bereiteter Milchschaum nach außen ausströmen. Wenn hingegen die Auslauföffnung durch die eingeschraubte Spülkappe verschlossen ist, wird der Dampf durch die Spülkappe in Rückflussrichtung umgelenkt, so dass er im Gegenstrom zu der bei Milchschaumbereitung auftretenden Strömungsrichtung durch den Schäumkörper zur Spülung zurückströmen kann und die Milchschaumerzeugungseinrichtung über eine Milcheinlassöffnung und eine Milchzuleitung sowie über eine Lufteinlassöffnung verlassen kann. Eine optimale Spülung aller vorgenannten Bestandteile der Milchschaumerzeugungseinrichtung ist damit nicht einstellbar.

Bei einer anderen bekannten Vorrichtung zum Zuführen von Milch aus einem Vorratsbehälter zu einer Ausgabeeinrichtung in einer Kaffeemaschine mit einer Aufschäumeinrichtung für Milch werden die Aufschäumeinrichtung und die Zufuhrleitung, die normalerweise mit einem Einlassende lösbar mit dem Vorratsbehälter verbunden ist, nacheinander mit Heißwasser- oder Dampf gereinigt, wozu das Einlassende der Zufuhrleitung aus einer Verbindung zum Vorratsbehälter gelöst und mit einem Heißwasser- und/oder Dampfauslass eines Heißwasser oder Dampferzeugers verbunden ist (EP 1 797 801 A1). Bei einer solchen Vorrichtung bzw. Kaffeemaschine ist, abgesehen von dem zweistufigen Reinigungsverfahren, nachteilig, dass hochwertige Ankopplungsglieder auf Seiten des Heißwasser- und/oder Dampfauslasses sowie an dem Milchansaugende der Zufuhrleitung erforderlich sind, die mit dem in dem Heißwasser- und/oder Dampfauslass herrschenden Druck und hoher Temperatur beaufschlagt werden. Deswegen müssen die Ankopplungsglieder vor Aktivierung des Heißwasser- und/oder Dampfauslasses sorgfältig verbunden werden. Entsprechend der Gestaltung der Ankopplungsglieder kann das Äußere wenigstens eines der beiden miteinander verbundenen Ankopplungsglieder bei dem Reinigungsvorgang der Zufuhrleitung in nicht einwandfreier Weise ungespült bleiben.

Auch bei einem anderen Apparat zum Reinigen einer Leitungsanordnung, die zur Zubereitung von Getränken auf Milchgrundlage verwendet wird, ist eine Milchansaugleitung von einer Milchquelle zu trennen und über eine Kupplung und eine Leitung mit einer Spülwasserquelle zu verbinden, bevor eine Reinigung mit Spülwasser erfolgen kann (EP 2 020 197 A1). Dabei wird die Milchansaugleitung über ein Ventil von einer Ausgabeeinrichtung abgesperrt, die einen Schäumer zum Bereiten von Milchschaum umfasst. Der abgesperrte Abschnitt der Milchansaugleitung, auch innen in der Ausgabeeinrichtung bzw. darin ein innerer Milchkanal, wird in diesem Fall nicht gereinigt. Dies gilt auch, wenn die Ausgabeeinrichtung des Apparats vor dem Reinigungsvorgang durch einen Behälter, z.B. mit Desinfektionsflüssigkeit, ersetzt wird. Der abgetrennte Teil der Ausgabeeinrichtung einschließlich des Schäumers sind im Bedarfsfall umständlich gesondert zu reinigen.

Eine weitere zum Stand der Technik gehörende Anordnung zum Aufschäumen von Milch in einem Heißgetränkeautomaten weist eine Aufschäumeinheit mit einer ersten Zuleitung zur gemeinsamen Zufuhr von Heißdampf und Umgebungsluft sowie eine zweite Zuleitung in Form eines Milchzuleitungsschlauchs auf (DE 10 2008 058 139 A1). In dieser Anordnung ist die Aufschäumeinheit zusammen mit der zweiten Zuleitung, dem Milchzuleitungsschlauch, als Gesamteinheit austauschbar, von der vor dem Austauschen nur die erste Zuleitung gelöst werden muss. Der Austausch der Aufschäumeinheit mit dem Milchzuleitungsschlauch soll einen Reinigungsvorgang in einem in der Anordnung eingesetzten Zustand überflüssig machen, ist aber aufwendig und erfordert Austauschmanipulationen.

Es ist weiterhin aus der Praxis bekannter Stand der Technik, einen Milchschäumer in einer Espressomaschine mit einem Mehrwegeventil auszustatten, welches außer Stellungen für die Zubereitung von Espresso, Cappuccino oder Latte Macchiato eine besondere Stellung für eine Spülung aufweist, in der die Zuführung eines Milch-Luftgemisches zu der Schäumkammer geschlossen ist und lediglich das Schäumersystem mittels Dampf und/oder Heißwasser aus einem Dampferzeuger gespült wird.

Der vorliegenden Erfindung liegt die Aufgabe zugrunde, zum gleichzeitigen Spülen von Schäumkammer und Milchzufuhrleitung, die aus hygienischen Gründen von nach dem Milchdurchfluss zurückgebliebenen Milchresten zu befreien sind, eine unkomplizierte, einfach und ohne Verbrühgefahr bedienbare Anordnung zu schaffen, mit der der Spülvorgang rasch und mit geringem Spülwasserverbrauch durchgeführt werden kann.

Diese Aufgabe wird mit einer Kaffeemaschine gelöst, welche die in Anspruch 1 angegebenen Merkmale aufweist.

Bei der erfindungsgemäßen Kaffeemaschine wird von einer Kaffeemaschine der eingangs genannten Gattung mit einer Milchschäumvorrichtung ausgegangen, bei der stromabwärts einer Schäumkammerauslassöffnung ein umschaltbares Auslassreduzierventil angeordnet ist, welches einen in einer Milchschaumbereitungsstellung durchschaltbaren Durchlassweg und eine Spülstellung aufweist, und bei der ein Bypasslufteingang der Milchschäumvorrichtung in Spülstellung der gesteuerten Ventilanordnung gegenüber dem inneren Milchkanal absperrbar ist.

Zum Reinigen der Milchschäumvorrichtung nach Lösen des Milchansaugendes der Milchzuführleitung von dem Milchvorratsbehälter und Verbinden mit der Restwasserschale oder einem anderen Auffanggefäß kann das Spülwasser aus einer Dampf-/Heißwasserzuführleitung über eine Venturidüse in die Schäumkammer eingeleitet werden, die über den inneren Milchkanal der Schäumvorrichtung mit der Milchzuführleitung in fluidleitender Verbindung steht. Der Bypasslufteingang bzw. die Luftzufuhr in den inneren Milchkanal ist dabei gesperrt. Bei dieser Konfiguration der Mittel zum Reinigen der Milchschäumvorrichtung und der Milchansaugleitung mit Spülwasser wird die Schäumkammer gespült und es wird außerdem durch das in Spülstellung geschaltete stromabwärts einer Schäumkammerauslassöffnung angeordneten umschaltbaren Auslassreduzierventils ein Stau des Spülwassers in der Schäumkammer erzeugt, so dass Spülwassers entgegen der normalen Fließrichtung von Milch bzw. Milch-Luft-Gemisch in dem inneren Milchkanal der Schäumvorrichtung und in der an dieser angeschlossenen Milchzuführleitung strömt und den inneren Milchkanal und die Milchzuführleitung spült

Wenn hingegen das umschaltbare Auslassreduzierventil in einer Milch-/Milchschaumbereitungsstellung mit seinem Durchlassweg ohne wirksame Querschnittsverengung durchgeschaltet ist, kann die Milch- oder Milchschaumbereitstellung in normaler Weise ohne signifikante Beeinflussung durch das Auslassreduzierventil erfolgen.

Ein Merkmal der erfindungsgemäßen Kaffeemaschine besteht darin, dass in der Spülstellung des Auslassreduzierventils ein Durchlassreduzierweg durchschaltbar ist.

Durch Dimensionierung des Auslassreduzierventils kann eine optimale Aufteilung des der Schäumkammer zugeführten Spülwassers zum Spülen der Schäumkammer mit dem Spülmitteldurchfluss letztlich über den durchgeschalteten Durchlassreduzierwag einerseits und zum Spülen des inneren Milchkanals und der Milchzuführleitung andererseits erreicht werden, wobei die Gesamtzufuhr Spülwasser und die Spüldauer minimiert werden können.

Um die Bedienung zu vereinfachen und Bedienungsfehler zu vermeiden, ist weiterhin erfindungsgemäß das Auslassreduzierventil mit der gesteuerten Ventilanordnung, die zweckmäßig als ein Getränke- und Spülfunktionsmehrwegeventil ausgebildet ist, bzw. einem mit diesem in Wirkverbindung stehenden Getränke- und Spülfunktionswahlsteller des Getränke- und Spülfunktionsmehrwegeventils gekoppelt. In diesem Fall braucht zum Reinigen der Kaffeemaschine mit der Schäumvorrichtung und der Milchzuführleitung nur das Milchansaugende der Milchzuführleitung von dem Milchvorratsbehälter gelöst und mit der Restwasserschale der Kaffeemaschine fluidleitend verbunden zu werden und der Getränke- und Spülfunktionswahlsteller auf Spülen eingestellt werden, womit gleichzeitig das Auslassreduzierventil den Durchlassreduzierweg in Spülstellung durchschaltet, so dass das anschließend in die Schäumkammer eingeleitete Spülwasser in der oben beschriebenen Weise sowohl die Schäumkammer als auch den inneren Milchkanal und die Milchzuführleitung spült. Konstruktiv unkompliziert und kompakt wird das Auslassreduzierventil nach Anspruch 2 mit einer Ventilwelle ausgebildet, an deren einem Abschnitt der Durchlassweg und der Durchlassreduzierweg ausgeformt sind, und an deren anderem Abschnitt der Betätigungshebel oder ein Kupplungselement zu dem Getränke- und Spülfunktionswahlsteller bzw. dem Getränke- und Spülfunktionswahlsteller angeordnet ist. In der letztgenannten Variante ist in Spülstellung des Getränke- und Spülfunktionswahlstellers zwangsweise der Durchlassreduzierweg des Auslassreduzierventils durchgeschaltet, so dass die Aufmerksamkeit einer Bedienperson nicht zum Umschalten des Auslassreduzierventils beansprucht wird.

Zu weiteren Förderung der Kompaktheit der Mittel zum Reinigen der Milchschäumvorrichtung ist diese nach Anspruch 3 als Milchschäumeinheit ausgebildet, in der die Ventilwelle des Auslassreduzierventils und der Getränke- und Spülfunktionswahlsteller drehbar gelagert sind. Insbesondere sind die Ventilwelle und der Getränke- und Spülfunktionswahlsteller mit zueinander parallelen Wellen ausgestattet bzw. angeordnet, so dass diese unkompliziert miteinander gekuppelt werden können. Zur Kupplung der Wellen kann insbesondere an einem Ende der Ventilwelle eine Kulissenscheibe angeordnet sein, in die ein Mitnehmerstift des Getränke- und Spülfunktionswahlstellers eingreift. Bei Betätigung des Getränke- und Spülfunktionswahlstellers wird somit das Auslassreduzierventil zwangsgesteuert mit verstellt.

Eine zur erfindungsgemäßen Spülung geeignete Milchschäumvorrichtung der Kaffeemaschine ist in Anspruch 4 angegeben.

Anspruch 5 betrifft eine zweckmäßige Ausbildung einer Kaffeemaschine mit der zu spülenden Milchschäumvorrichtung

Ein im wesentlichen komplettes Ausführungsbeispiel der Mittel zum Spülen der Milchschäumvorrichtung einer Kaffeemaschine sowie dessen Vorstufe sind nachfolgend anhand einer Zeichnung mit sechs Figuren beschrieben, woraus sich weitere vorteilhafte Einzelheiten der Erfindung ergeben können. Es zeigen:
- Fig. 1: eine Vorstufe einer als Milchschäumeinheit ausgebildeten Milchschäumvorrichtung in einem Längsschnitt in einer Milchschaumzubereitungsstellung,
- Fig. 2: die Milchschäumeinheit gemäß Figur 1, ebenfalls in einem Längsschnitt, jedoch in einer Spülstellung,
- Fig. 3: eine schaubildliche Darstellung einer Einzelheit der Milchschäumeinheit, insbesondere einen Betätigungshebel des direkt manuell betätigbaren Auslassreduzierventils,
- Fig. 4: eine Ausführungsform der Milchschäumeinheit in einem Längsschnitt in einer Milchschaumzubereitungsstellung,
- Fig. 5: die Ausführungsform gemäß Figur 4, ebenfalls in einem Längsschnitt, in einer Spülstellung und
- Fig. 6: in einer schaubildlichen Darstellung eine Einzelheit der Ausführungsform der Milchschäumeinheit, nämlich den mit dem umschaltbaren Auslassreduzierventil gekoppelten Getränke- und Spülfunktionswahlstellers eines Getränke- und Spülfunktionsmehrwegeventils.

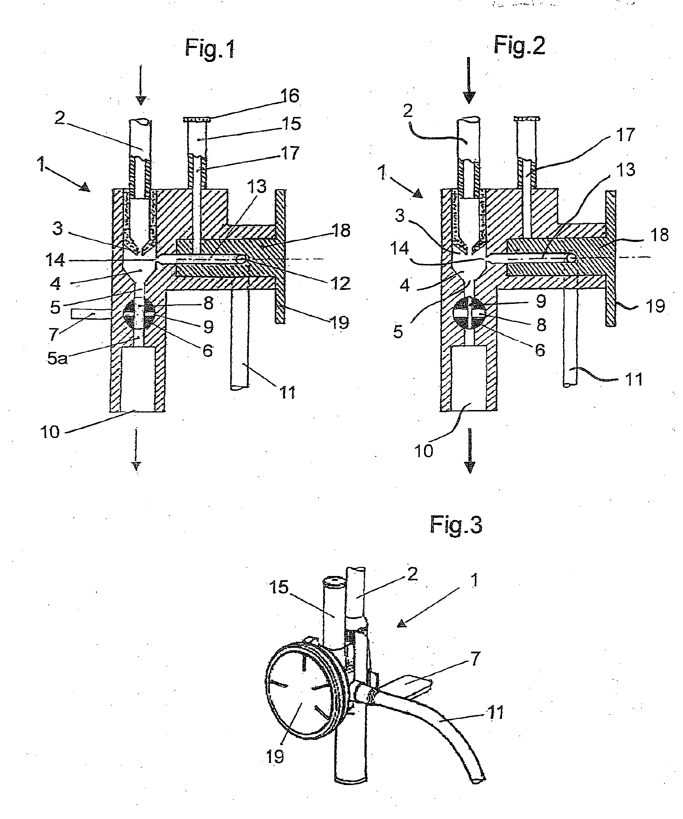

In den Figuren 1 und 2 ist eine Milchschäumvorrichtung als schematisch dargestellte Milchschäumeinheit 1 ausgebildet, in die eine Dampf-/Heißwasserzuführleitung 2 mündet, und zwar in eine in der Milchschäumeinheit 1 angeordnete Venturidüse 3. An die Venturidüse 3 schließt sich in der mitnicht bezeichneten Pfeilen verlaufenden Durchflussrichtung eine Schäumkammer 4 an, die eine Schäumkammerauslassöffnung 5 aufweist.

Stromabwärts der Schäumkammerauslassöffnung 5 ist in der Milchschäumeinheit 1 ein durch Drehung umschaltbares Auslassreduzierventil 6 gelagert, welches mittels eines Betätigungshebels 7 direkt umschaltbar, d.h. umstellbar, ist. Das Auslassreduzierventil 6 weist quer zu einer fiktiven Drehachse einen in Milchschaumzubereitungsstellung eingeschalteten Durchlassweg 8 auf, siehe Figur 1, sowie hierzu rechtwinklig versetzt einen Durchlassreduzierweg 9, der nur in der Spülstellung des Auslassreduzierventils 6 gemäß Figur 2 eingeschaltet ist, so dass es je nach seiner Einstellung entweder über den normalen Durchlassweg 8 oder über den Durchlassreduzierweg 9 die Schäumkammerauslassöffnung 5 mit einem Reduzierventilauslass 5a verbindet, der über einen nicht bezeichneten erweiterten Strömungskanal mit einer Ablauföffnung 10 der Schäumeinheit 1 in Verbindung steht.

Da das umschaltbare Auslassreduzierventil 6 zwei wechselweise einstellbare Strömungswege aufweist, nämlich den Durchlassweg und den Durchlassreduzierweg, kann es auch als Zwei-Wege-Ventil bezeichnet werden.

In den Figuren 1 und 2 ist weiterhin ein Abschnitt einer Milchzuführleitung 11 dargestellt, der über eine Milcheintrittsöffnung 12 mit einem inneren Milchkanal 13 der Schäumeinheit 1 verbunden ist. Der Milchkanal 13 mündet über eine Milchkanaldüse 14 in die Schäumkammer.

Weiterhin weist die Milchschäumeinheit 1 eine Luftzuführleitung 15 auf, die über einen Luftmengenregler 16 mit einem Luftkanal 17 in Verbindung steht, der in den Milchkanal 13 über ein Getränke- und Spülfunktionswahlventil 18 mündet, wenn sich dieses gemäß Figur 1 in der Milchschaumzubereitungsstellung befindet.

Je ein Abschnitt des Milchkanals 13 und des Luftkanals 17 ist aus einer Ventilwelle 23 eines Getränke- und Spülfunktionsmehrwegeventils 18 ausgeformt, mit dem die mit der Kaffeemaschine zubereitbaren Getränkearten und eine Spülfunktion eingestellt werden können. Das Getränke- und Spülfunktionsmehrwegeventil kann zur Einstellung der Getränkearten weitere Strömungswege sowie Anschlüsse aufweisen.

Das Getränke- und Spülfunktionswahlventil ist durch Drehen eines Getränke- und Spülfunktionswahlstellers 19 einstellbar, der an einem Endabschnitt des Getränke- und Spülfunktionswahlstellers angeordnet ist.

Weitere Mittel der Kaffeemaschine bzw. Espressomaschine, zu der die dargestellte Milchschäumeinheit 1 gehört und mit denen je nach Einstellung des Getränke- und Spülfunktionswahlstellers 19 Milchgetränke oder Kaffee-Milchgetränke ausgewählt und zubereitet werden können, sind in der Zeichnung nicht vollständig dargestellt und beschrieben, da an sich bekannt.

Eine fiktive Drehachse des zylindrischen Getränke- und Spülfunktionswahlstellers 19 ist parallel zu derjenigen einer Ventilwelle 23 des umschaltbaren Auslassreduzierventils 20 in der Milchschäumeinheit 1 kompakt angeordnet. In einer Einstellung des Getränke- und Funktionswahistellers 19 zum Zubereiten von Milchschaum gemäß Figur 1 strömt in üblicher Weise Dampf und/oder Heißwasser aus einem Dampfgenerator, insbesondere einem Durchlauferhitzer der Espressomaschine, durch die Venturidüse 3 in die Schäumkammer 4, in der aufgrund des in ihr entstehenden Unterdrucks Milch oder Milch-Luft-Gemisch aus dem inneren Milchkanal 13 angesaugt werden kann. In der Schäumkammer 4 wird das eintretende Milch-Luft-Gemisch zu Milchschaum aufgeschäumt. Der an der Schäumkammerauslassöffnung 5 austretende Milchschaum strömt weitgehend ungehindert durch den Durchlassweg 8 des mit dem Betätigungshebel 7 eingestellten umschaltbaren Auslassreduzierventils 6 über dessen Reduzierventilauslass 5a zu einer Ablauföffnung 10 der Schäumeinheit 1, aus der er zum Beispiel in eine untergestellte Tasse ablaufen kann.

Aus hygienischen Gründen ist es notwendig, Milchreste, die in der Milchzuführleitung 11 zu der Milchschäumeinheit 1 und in dieser selbst zurückbleiben können, auszuspülen. Hierzu wird das Auslassreduzierventil 6 vorbereitet, indem es mit dem Betätigungshebel 7 aus der in Figur 1 dargestellten Milchschaumzubereitungsstellung in die in Figur 2 dargestellte Spülstellung gedreht wird, so dass in dem Strömungsweg zwischen der Schäumkammerauslassöffnung 5 und der Ablauföffnung 10 der Schäumeinheit nicht mehr der widerstandsarme Durchlassweg 8 des Auslassreduzierventils 6 wirksam ist, sondern der verengte Durchlassreduzierweg 9. Damit kann, nachdem durch Einstellen des Getränke- und Spülfunktionswahlstellers 19 in die in Fig. 2 gezeigte Stellung, in der die Luftzufuhr zu dem inneren Milchkanal 13 von dem Luftkanal 17 abgesperrt ist, nach Einleiten des Spülvorgangs das in die Schäumkammer einströmende Heißwasser bzw. der Dampf nicht weitgehend ungehindert aus der Schäumkammer 4 durch das Auslassreduzierventil 6 abfließen, sondern es bzw. er wird infolge des verengten lichten Strömungsquerschnitts in dem Auslassreduzierventil 6 in der Schäumkammer 4 gestaut, aus der nur ein Teil durch das Auslassreduzierventil nach unten abfließt. Währenddessen fließt ein anderer Teil durch die Milchkanaldüse 14 und den Milchkanal 13 und anschließend durch die Milchzuführleitung 11 in entgegengesetzter Richtung zu der Milchzuführrichtung ab. Dadurch werden also die Schäumkammer und der sich an die Schäumkammerauslassöffnung 5 anschließende Strömungsweg des Milchschaums oder der Milch gespült und es werden gleichzeitig der innere Milchkanal 13 der Milchschäumeinheit 1 und die hieran angeschlossene Milchzuführungsleitung 11 bis einschließlich deren Milchansaugende gespült. Das belastete Spülwasser kann in der nicht gezeigten Restwasserschale der Espressomaschine oder einem anderen Auffanggefäß, mit dem an das normalerweise Milch ansaugende Milchansaugende der Milchzuführleitung 11 zuvor verbunden wurde, aufgefangen werden.

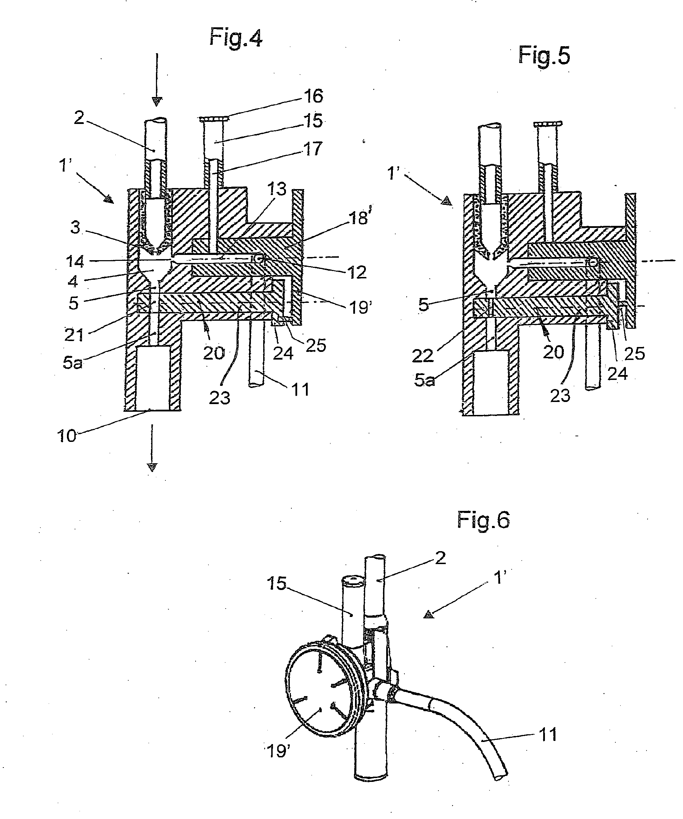

Die in den Figuren 4, 5 und 6 dargestellte Ausführungsform der Milchschäumeinheit 1 unterscheidet sich von der voranstehenden Vorstufe durch die Ausbildung des umschaltbaren Auslassreduzierventils 20 und dessen Kopplung mit dem Getränke- und Spülfunktionswahlsteller 19' anstelle eines unmittelbar manuell zu betätigenden Betätigungshebels 7 gemäß den Figuren 1 und 3.

Das in den Figuren 4 und 5 gegenüber den Figuren 1 und 2 um 90° gedreht dargestellte umschaltbare Auslassreduzierventil 20 umfasst eine Ventilwelle 23, aus deren einem Endabschnitt der volle Durchlassweg 21 ausgeformt ist, siehe Figur 4 sowie - hierzu rechtwinklig versetzt - der Durchlassreduzierweg 22, siehe Figur 5.

An dem entgegengesetzten Endabschnitt der Ventilwelle 23 weist diese eine Kulissenscheibe 24 auf, die über einen Mitnehmerstift 25 an dem Getränke- und Spülfunktionswahlsteller 19' an diesen angekoppelt ist.

Demzufolge wird das umschaltbare Auslassreduzierventil 20 zwangsläufig entsprechend der Einstellung des Getränke- und Spülfunktionswahlstellers 19' und damit des Getränke- und Spülfunktionsmehrwegeventils 18' richtig eingestellt, und zwar in einer Milchschaumzubereitungsstellung des Getränke- und Spülfunktionswahlstellers 19' gemäß Figur 4 mit vollem Durchlassweg 21 oder in Spülstellung des Getränke- und Spülfunktionswahlstellers 19' gemäß Figur 5 mit eingestelltem Durchlassreduzierweg 22.

Damit erfolgen die Milchschaumzubereitung und die gegebenenfalls anschließend eingestellte Spülung mit der zweiten Ausführungsform der Milchschäumeinheit 1' wie weiter oben zu der ersten Ausführungsform der Milchschäumeinheit 1 beschrieben.

Die übereinstimmenden Teile der Milchschäumeinheit 1 und der Milchschäumeinheit 1' sind mit gleichen Bezugszeichen versehen.

### Bezugszahlenliste

- 1, 1': Milchschäumvorrichtung/-einheit
- 2: Dampf-/Heißwasserzuführleitung
- 3: Venturidüse
- 4: Schäumkammer
- 5: Schäumkammerauslassöffnung
- 5a: Reduzierventilauslass
- 6: umschaltbares Auslassreduzierventil
- 7: Betätigungshebel
- 8: Durchlassweg
- 9: Durchlassreduzierweg
- 10: Ablauföffnung der Schäumvorrichtung bzw. -einheit
- 11: Milchzuführleitung
- 12: Milcheintrittsöffnung
- 13: Milchkanal
- 14: Milchkanaldüse
- 15: Luftzuführleitung
- 16: Luftmengenregler
- 17: Luftkanal (Bypasslufteingang)
- 18, 18': Getränke- und Spülfunktionsmehrwegeventil
- 19, 19': Getränke- und Spülfunktionswahlsteller
- 20: umschaltbares Auslassreduzierventil
- 21: Durchlassweg
- 22: Durchlassreduzierung
- 23: Ventilwelle
- 24: Kulissenscheibe
- 25: Mitnehmerstift

## Patentansprüche

1. Kaffeemaschine, insbesondere Espressovollautomat, mit einer Milchschäumvorrichtung (1'), in der ein innerer Milchkanal (13) zu einer Schäumkammer (4) vorgesehen ist, in den ein Bypasslufteingang (17) für eine zuschaltbare Luftzufuhr mündet und an den eine bewegliche Milchzuführleitung (11) angeschlossen ist, wobei Mittel zum Reinigen der Milchschäumvorrichtung (1') und der Milchzuführleitung (11) mit Spülwasser aus einem Durchlauferhitzer der Kaffeemaschine vorgesehen sind, mit denen der Milchschäumvorrichtung (1') über eine gesteuerte Ventilanordnung Spülwasser zuführbar ist und ein Milchansaugende der Milchzuführleitung (11) vor Beaufschlagung der Milchschäumvorrichtung (1, 1') mit Spülwasser statt mit einem Milchvorratsbehälter mit einer Restwasserschale der Kaffeemaschine unmittelbar oder mittelbar fluidleitend verbindbar ist,
wobei stromabwärts einer Schäumkammerauslassöffnung (5) ein umschaltbares Auslassreduzierventil (20) angeordnet ist, welches einen in einer Milch-/Milchschaumbereitungsstellung durchschaltbaren Durchlassweg (8, 21) und eine Spolstellung aufweist und
wobei der Bypasslufteingang (17) der Milchschäumvorrichtung (1, 1') in Spülstellung der gesteuerten Ventilanordnung gegenüber dem inneren Milchkanal (13) absperrbar ist,
**dadurch gekennzeichnet,**
**dass** in der Spülstellung des Auslassreduzierventils (20) ein Durchlassreduzierweg durchschaltbar ist, dass die gesteuerte Ventilanordnung ein Getränke- und Spülfunktionsmehrwegeventil (18') mit einem Getränkewahl- und Spülfunktionswahlsteller (19') ist und
**dass** das Auslassreduzierventil (20) mit dem Getränke- und Spülfunktionswahlsteller (19') bzw. dem Getränke- und Spülfunktionsmehrwegeventil (18') gekoppelt ist.

2. Kaffeemaschine nach Anspruch 1,
**dadurch gekennzeichnet,**
**dass** das Auslassreduzierventil (20) eine Ventilwelle (23) aufweist, an deren einem Abschnitt der Durchlassweg (8, 21) und der Durchlassreduzierweg (22) ausgeformt sind und an deren anderem Abschnitt ein Kupplungselement zu dem Getränke- und Spülfunktionswahlsteller (19') bzw. dem Getränke- und Spülfunktionsmehrwegeventil (18) angeordnet ist, derart, dass in Milchschaumzubereitungsstellung des Getränke- und Spülfunktionswahlstellers (19') bzw. des Getränke- und Spülfunktionsmehrwegeventils (18) der Durchlassweg (21) des Auslassreduzierventils (20) durchgeschaltet ist und in Spülstellung des Getränke- und Spülfunktionswahlstellers (19') bzw. des Getränke- und Spülfunktionsmehrwegeventils (18') der Durchlassreduzierweg (22) des Auslassreduzierventils (20) durchgeschaltet ist.

3. Kaffeemaschine nach Anspruch 2,
**dadurch gekennzeichnet,**
**dass** die Milchschäumvorrichtung (1') als Milchschäumeinheit ausgebildet ist, in der die Ventilwelle (23) des Auslassreduzierventils (20) und das Getränke- und Spülfunktionsmehrwegeventil (18') mit dem Getränke- und Spülfunktionswahlsteller (19') drehbar gelagert sind.

4. Kaffeemaschine nach einem der vorangehenden Ansprüche,
**dadurch gekennzeichnet,**
**dass** das Spülwasser aus einer Dampf-/Heißwasserzuführleitung (2) über eine Venturidüse (3) in die Schäumkammer (4) einleitbar ist, die über den inneren Milchkanal (13) der Milchschäumvorrichtung (1') mit der Milchzuführleitung (11) in fluidleitender Verbindung steht.

5. Kaffeemaschine nach Anspruch 4,
**dadurch gekennzeichnet,**
**dass** in die Restwasserschale ein an einem Kaffeemaschinengehäuse angeordneter Spülwasserablaufstutzen mündet, mit dem das Milchansaugende der Milchzuführleitung (11) kuppelbar ist.

## Claims

1. Coffee machine, in particular fully automatic espresso machine, having a milk-frothing device (1') in which an internal milk channel (13) to a frothing chamber (4) is provided, into which internal milk channel a bypass air inlet (17) for a connectable air supply flows, and onto which a movable milk supply line (11) is connected, wherein means are provided for cleaning the milk-frothing device ('1') and the milk supply line (11) with rinsing water from a continuous-flow water heater of the coffee machine, with which means rinsing water can be supplied to the milk-frothing device (1') via a controlled valve arrangement, and a milk suction end of the milk supply line (11) can be connected directly or indirectly fluidically to a drip tray of the coffee machine instead of to a milk reservoir, before charging of the milk-frothing device (1') with rinsing water,
wherein downstream of a frothing chamber outlet (5) a switchable outlet reducing valve (20) is arranged, which has a passage way (8, 21) which can interconnect in a milk / milk froth preparation position, and a rinsing position, and
wherein the bypass air inlet (17) of the milk-frothing device (1, 1') can be closed off with respect to the internal milk channel (13), in the rinsing position of the controlled valve arrangement,
**characterised**
**in that** in the rinsing position of the outlet reducing valve (20), a reducing passage way can interconnect, in that the controlled valve arrangement is a beverage and rinsing function multi-way valve (18') with a beverage and rinsing function selection controller (19'), and
**in that** the outlet reducing valve (20) is coupled to the beverage and rinsing function selection controller (19') or the beverage and rinsing function multi-way valve (18').

2. Coffee machine according to claim 1,
**characterised in that**
the outlet reducing valve (20) has a valve shaft (23) on a portion of which the passage way (8, 21) and the reducing passage way (22) are formed, and on the other portion of which a coupling element to the beverage and rinsing function selection controller (19') or the beverage and rinsing function multi-way valve (18) is arranged, in such a way that the passage way (21) of the outlet reducing valve (20) interconnects with the milk froth preparation position of the beverage and rinsing function selection controller (19') or the beverage and rinsing function multi-way valve (18'), and the reducing passage way (22) of the outlet reducing valve (20) interconnects with the rinsing position of the beverage and rinsing function selection controller (19') or the beverage and rinsing function multi-way valve (18').

3. Coffee machine according to claim 2,
**characterised in that**
the milk-frothing device (1') is constructed as a milk-frothing unit in which the valve shaft (23) of the outlet reducing valve (20) and the beverage and rinsing function multi-way valve (18') are rotatably mounted with the beverage and rinsing function selection controller (19').

4. Coffee machine according to any of the preceding claims,
**characterised in that**
the rinsing water can be introduced from a steam / hot water supply line (2) via a venturi nozzle (3) into the frothing chamber (4) which is fluidically connected to the milk supply line (11) via the internal milk channel (13) of the milk-frothing device (1').

5. Coffee machine according to claim 4,
**characterised in that**
a rinsing water outlet nozzle arranged on a coffee machine housing flows into the drip tray, to which rinsing water outlet nozzle the milk suction end of the milk supply line (11) can be coupled.

## Revendications

1. Machine à café, notamment machine expresso automatique, avec un dispositif de moussage de lait (1'), dans lequel est installée une canalisation interne pour le lait (13) menant vers une chambre de moussage (4), dans laquelle débouche une entrée d'air par un système de dérivation (17), pour une alimentation en air pouvant être raccordée, et sur laquelle une conduite d'alimentation en lait (11) mobile est attachée, des moyens pour le nettoyage du dispositif de moussage de lait (1') et pour la conduite d'alimentation en lait (11) à l'aide d'eau de lavage provenant d'un chauffe-eau à écoulement continu de la machine à café étant prévus, avec lesquels le dispositif de moussage de lait (1') peut être alimenté par l'intermédiaire d'un ensemble de soupapes à commandes, et une extrémité d'aspiration du lait de la conduite d'alimentation en lait (11) peut être mise en liaison par conduction de fluide en eau de lavage directement ou indirectement avec un récipient d'eau résiduelle de la machine à café plutôt qu'avec un récipient de réserve de lait avant la mise en circulation d'eau de lavage dans le dispositif de moussage de lait (1'),
une soupape de réduction de sortie (20) commutable, étant disposée en aval par rapport à un orifice de sortie (5) de la chambre de moussage, et présentant une voie de passage (8, 21) pouvant être commutée dans une position de préparation de lait/de mousse de lait et une position de lavage et
l'entrée d'air par un système de dérivation (17) du dispositif de moussage de lait (1, 1') pouvant être bloquée en position de lavage de l'ensemble de soupapes à commandes par rapport à la canalisation interne pour le lait (13),
**caractérisée en ce**
**que**, dans la position de lavage de la soupape de réduction de sortie (20), une voie de passage réduite peut être ouverte, de sorte que l'ensemble de soupapes à commandes constitue une soupape à voies multiples pour les fonctions boissons et lavage (18') avec un organe sélection pour les fonctions boissons et lavage (19'), et
**que** la soupape de réduction de sortie (20) est couplée avec l'organe de sélection des fonctions boissons et lavage (19'), respectivement, avec la soupape à voies multiples pour les fonctions boissons et lavage (18').

2. Machine à café selon la revendication 1
**caractérisée en ce**
**que** la soupape de réduction de sortie (20) présente une broche de soupape (23), sur une section de laquelle sont formées une voie de passage (8, 21) et une voie de réduction de passage (22) et sur une autre section de laquelle est agencé un élément de couplage vers l'organe de sélection des fonctions boissons et lavage (19'), respectivement, vers la soupape à voies multiples pour les fonctions boissons et lavage (18), de sorte que, dans la position de préparation de mousse de lait de l'organe de sélection des fonctions boissons et lait (19'), respectivement, de la soupape à voies multiples des fonctions boissons ou lait (18'), la voie de passage (21) de la soupape de réduction de sortie (20) est ouverte et la voie de réduction de passage (22) de la soupape de réduction de sortie (20) est ouverte dans la position de lavage de l'organe de sélection des fonctions boissons ou lavage (19'), respectivement, de la soupape à voies multiples des fonctions boissons et lavage (18').

3. Machine à café selon la revendication 2,
**caractérisée en ce**
**que** le dispositif de moussage de lait (1') est conçu sous la forme d'une unité de moussage de lait, dans laquelle la broche de soupape (23) de la soupape de réduction de sortie (20) et la soupape à voies multiples des fonctions boissons et lavage (18') sont logées, en pouvant être mise en rotation, avec l'organe de sélection des fonctions boissons et lavage (19').

4. Machine à café selon l'une des revendications précédentes,
**caractérisée en ce**
**que** l'eau de lavage peut être alimentée à partir d'une conduite d'alimentation en vapeur/en eau chaude (2) dans la chambre de moussage (4) par l'intermédiaire d'un gicleur à venturi (3), qui est en liaison par conduction de fluide avec la conduite d'alimentation en lait (11) par l'intermédiaire de la canalisation interne pour le lait (13) du dispositif de moussage de lait (1').

5. Machine à café selon la revendication 4,
**caractérisée en ce**
**qu'**un support rigide d'évacuation de l'eau de lavage, disposé dans le boîtier de la machine à café, avec lequel la conduite d'alimentation en lait (11), aspirant le lait peut être couplée, débouche dans le récipient d'eau résiduelle.
